# EUROPEAN PATENT APPLICATION

(11) **EP 4 276 765 A1**
(43) Date of publication of application: **15.11.2023**
(21) Application number: 22172756.3
(22) Date of filing: 11.05.2022
(51) Int. Cl.: G06T 19/20

(54) **METHOD TO CORRECT SCALE OF DENTAL IMPRESSIONS**

(71) Applicant: DENTSPLY SIRONA Inc., York, PA 17401 (US); Sirona Dental Systems GmbH, 64625 Bensheim (DE)
(72) Inventor: Maur, Susanne, 64625 Bensheim (DE); Meyer, Marcel, 64625 Bensheim (DE); Wirjadi, Oliver, 64625 Bensheim (DE)
(74) Representative: Özer, Alpdeniz

(57) **Abstract**

A method for providing a scaled 3D model of a dental condition comprising: providing, an unscaled 3D model and/or a plurality of 2D images of the dental condition; detecting, via a scaling logic, one or more deterministic features in the unscaled 3D model and/or in at least one of the 2D images; computing, in response to the detection, one or more scaling factors; generating, the scaled 3D model, by: applying at least one of the scaling factors to the unscaled 3D model; or reconstruction using the plurality of 2D images. The present teachings also relate to systems, a dental scanner, software products, uses and storage media.

## Description

### TECHNICAL FIELD

The present teachings relate generally to computer-implemented methods and systems for dental scanning and its resulting 3D models.

### BACKGROUND

Dental scanners such as intraoral dental scanners, or simply called dental scanners, are used for capturing digital dental impressions of a patient. An impression is usually in the form of a three-dimensional ("3D") model and may relate to features of interest of oral anatomy, such as teeth and/or soft and/or hard tissues in the patient's oral cavity. The impression may be digitally stored and/or transmitted to a dental practitioner. The digital impression can also be used for other purposes, such as producing a dental restoration and planning or performing a dental treatment.

Most dental scanners are based on structured light principle. Such scanners comprise means for projecting light pattern on the intraoral geometry. The pattern when projected on intraoral geometry appears contoured dependent upon the shape of the geometry. The scanners also comprise a camera for capturing light reflected from the geometries which comprises information related to the contours formed in the projected pattern. Signal from the camera is then sent to a computing unit for extracting shape information of the intraoral geometry. Subsequently, a digital impression or 3D model of the intraoral geometry can be reconstructed from the shape information, which usually is in the form of a point cloud. Additional or alternative shape representations such as meshes can also be generated.

Generating a digital impression which is properly scaled with respect to an oral cavity's physical dimensions usually requires resorting to 3D metrology. These may require consideration in the hardware design of an intraoral scanner which can ultimately incur an added cost. Similar, or additional, problems may also exist for extraoral scanners as well. As the name suggests, as compared to a dental scanner, an extraoral scanner performs the dental scan by being located externally from the oral cavity.

In recent times, self-scanning or self-use type dental scanners have also been introduced. Such scanners can allow a patient to scan their own oral cavity, or in general allow non-practitioners to perform a scanning operation. This can save costs for the user as compared to having a dental practitioner or professional perform the scan and/or dental health monitoring can be improved by performing more accurate and/or faster scans at home. For direct to customer market, lower cost solutions are generally more attractive.

There is thus recognized a need for improved scanning methods and devices.

### SUMMARY

At least some of the limitations associated with the foregoing can be overcome by the subject matter of the accompanying independent claims. At least some of the additional advantageous alternatives will be outlined in the dependent claims.

The applicant has realized by inventive effort that an unscaled 3D model of a dental condition of a patient can be improved by detecting certain features, particularly deterministic ones, in the model and using the detection to correct scaling of the model. This can allow using cheaper or faster techniques for capturing the unscaled 3D model, and then post-processing the unscaled 3D model to generate a scaled 3D model which is improved in terms of scale as compared to the unscaled 3D model. Those skilled in the art shall appreciate that the teachings can also be applied for verification or quality assessment of digital impressions. Accordingly, the teachings are also applicable to conventional scanners or scanning systems for quality check of reconstructed models and/or for further improvement of scale of the model. Further beneficial uses can also be contemplated, for example, performing the dental scanning of a patient more quickly, to reduce chair time for the patient, by letting the proposed post-processing make the model more accurate rather than using a slower scan to capture an accurate model. Thus, dependent upon the cost and/or comfort level desired, the teachings can be applied to a variable degree to provide different technical advantages.

More specifically, when viewed from a first perspective, there can be provided a computer-implemented method for providing a scaled 3D model of a dental condition, which method comprises:
- providing, an unscaled 3D model and/or a plurality of two-dimensional images of the dental condition of the dental condition;
- detecting, via a scaling logic, one or more deterministic features in the unscaled 3D model and/or in at least one of the two-dimensional images;
- computing, one or more scaling factors, in response to the detection;
- generating, the scaled 3D model, by:
   applying at least one of the scaling factors to the unscaled 3D model; or
   reconstruction using the plurality of two-dimensional images.

Thus, a more true-to-scale scaled 3D model can be provided as compared to the unscaled 3D model, which may have a less accurate scale overall or in in parts of the model. The representation of the dental condition in the scaled 3D model may thus be more accurate to scale in an absolute or relative manner as compared to the representation in the unscaled 3D model. For example, the unscaled 3D model may be accurate in certain parts, while inaccurate in others due to non-idealities such as distortion. Additionally, or alternatively, the unscaled 3D model may be inaccurate as a whole due to inaccurate or missing scale of the model as a whole. In cases, where an unscaled 3D model is not yet built, a scaled 3D model can be provided directly by leveraging the one or more deterministic features from one or more of the two-dimensional ("2D") images. The terms *2D images of the dental condition* and *2D dental images* will be used interchangeably in the present disclosure. The present teachings can be used to reduce the inaccuracies in scale of the model at least partially. The deterministic features may be detected in relation to the dental condition. Alternatively to providing the scaled 3D model by applying at least some of the scaling factors to the unscaled 3D model, the scaled 3D model may be provided directly by reconstructing the scaled 3D model from at least some of the two-dimensional images and by using at least one of the scaling factors.

The unscaled 3D model and/or the scaled 3D model may even be provided at a human machine interface ("HMI") for assisting the user and/or for the user to select or adapt the model using user input.

The 2D dental images are captured via a dental scanner. The unscaled 3D model may be provided from the 2D dental images. Thus, the method may also comprise:
- reconstructing, using a data-driven reconstruction logic, the unscaled 3D model from the 2D dental images.

The 2D dental images may be of visual imaging type.

According to an aspect, at least one of the deterministic features is related to a scanbody. Dependent upon the application, the scanbody may either be an intraoral scanbody or it may be an extraoral scanbody.

Alternatively, or additionally, at least one of the deterministic features may be related to 3D data from an imaging modality. The imaging modality may for example be X-ray CBCT or another optical scan of at least a part of the dental condition.

Alternatively, or additionally, at least one of the deterministic features may be related to a dental registration object detectable via the scaling logic.

According to an aspect, the computation of at least one of the scaling factors is also performed via the scaling logic. According to an advantageous aspect, the scaling logic is a data-driven scaling logic.

According to an aspect, the scaled 3D model is generated via a data-driven model constructor logic.

At least one of the scaling factors may be computed for distortion correction of the unscaled 3D model.

When viewed from another perspective, there can also be provided a computer software product, or a non-transitory computer-readable storage medium storing the program, comprising instructions which when executed by suitable one or more computing units cause any of the computing units to perform the steps of any of the herein disclosed methods.

For example, there can be provided a computer software product, or a non-transitory computer-readable storage medium storing the program, comprising instructions which when executed by one or more suitable computing units cause any of the computing units to:
- provide, an unscaled 3D model and/or a plurality of 2D images of the dental condition;
- detect one or more deterministic features in the unscaled 3D model and/or in at least one of the 2D images;
- compute, in response to the detection, one or more scaling factors;
- generate the scaled 3D model by:
   applying the one or more scaling factors to the unscaled 3D model; or
   reconstruction using the plurality of 2D images.

When viewed from another perspective, there can also be provided a system comprising means for performing the steps of any of the herein disclosed methods.

For example, there can be provided a system comprising one or more computing units, wherein the system is configured such that any of the computing units are configured to:
- provide, an unscaled 3D model and/or a plurality of 2D images of the dental condition;
- detect one or more deterministic feature in the unscaled 3D model and/or in at least one of the 2D images;
- compute, in response to the detection, one or more scaling factors;
- generate, the scaled 3D model, by:
   applying the one or more scaling factors to the unscaled 3D model; or
   reconstruction using the plurality of 2D images.

There can even be provided a dental scanner comprising:
a sensor unit for capturing 2D images of a dental condition; and
an interface for connecting to one or more computing units, any of which computing units are configured to:
   - provide, an unscaled 3D model and/or a plurality of 2D images of the dental condition;
   - detect, via a scaling logic, one or more deterministic features in the unscaled 3D model and/or in at least one of the 2D images;
   - compute, in response to the detection, one or more scaling factors;
   - generate a scaled 3D model by:
applying the one or more scaling factors to the unscaled 3D model; or
reconstruction using the plurality of 2D images.

Any of the computing units may be configured to provide the unscaled 3D model by constructing the unscaled 3D model using the 2D dental images.

When viewed from another perspective, there can also be provided a use of the scaled 3D model generated as herein disclosed for performing a dental procedure and/or for manufacture of a dental object. In other words, there can be provided a computer-implemented method comprising:
- performing a dental procedure and/or manufacturing a dental object using the scaled 3D model.

There can even be provided a data-storage medium storing thereupon the scaled 3D model as generated as herein disclosed.

"Dental condition" refers more specifically to a state of the oral anatomy at the time at which the dental images are captured, or the time at which the scan is performed for providing the dental images.

"Dental image" or "2D dental image" refers an image of the craniofacial anatomy, more specifically of oral anatomy, captured via an extraoral or a dental scanner. The advantages of the present teachings can be best appreciated with visual light dental images. Such images often lack scale information of the features, so the present teachings can leverage deterministic feature detection to automatically compute scale for such images and then apply the scale information to reconstruct the scaled 3D model. However, at least some of the dental images may even be structured light images captured via a dental scanner.

Generally, the plurality of dental images is provided as image data generated by the scanner during a scanning operation.

In some cases, the dental images may be in the form of a data-stream, or they may be comprised in a data-stream. The data-stream may at least partially be generated via the dental scanner.

"Dental scanner" refers to a device that is used to capture a digital impression of oral anatomy or dental condition. Thus, a dental scanner is usable for generating digital dental impressions for a patient or a digital model of the patient's mouth.

The dental scanner may either be extraoral type or an intraoral type. An intraoral scanner is inserted in the oral cavity of the patient for capturing the digital impression, however an extraoral dental scanner captures the dental images from outside the oral cavity, more particularly, an extraoral dental scanner captures the shape of an oral cavity based on a so-called stone model as produced, e.g., in dental laboratories. The scope and generality of the present teachings is unaffected by a specific type of scanner. However, the present teachings can be especially advantageous for low-cost scanners low-cost scanners based on visual imaging principle. It is thus another advantage of the present teachings that 2D images irrespective of the scanner type can be used to provide the scaled 3D model.

Many commercial grade scanners are based on structured light principle which involves projecting light patterns on the oral features and then extracting surface information from the contours formed in the light projected on 3D oral surfaces. Such scanners are typically expensive and thus unattractive for consumer market.

The applicant has realized that the present teachings can be especially beneficial for the consumer segment offering scanners based on pure 2D or visual light images, such as those captured via a normal camera the types of which are usually found in consumer devices such as mobile phones, tablets and webcams. Dental images captured via such visual imaging cameras will typically lack reliable 3D information, however a data-driven reconstruction logic can be advantageously leveraged to generate a 3D model of the oral anatomy from 2D images captured via a white light camera. Often such a generated model will be an unscaled 3D model, so the applicant has further realized that by using the scaling logic as proposed, the scale deficiencies of the unscaled 3D model can be at least partially corrected. Moreover, at least the post-processing part of generating the scaled 3D model can advantageously be performed via a remote service such as a cloud-based service. This can make the dental scanner much cheaper by reducing the hardware and/or software requirements. Alternatively, or additionally, it is possible to provide the data-driven reconstruction logic as the remote or cloud service, which can further make the scanner simpler and cheaper.

Those skilled in the art shall appreciate from the above that the present disclosure can also apply to scanners which rely on structured light imaging, or any other specific 3D measuring techniques further extending the visual imaging principle.

The dental scanner may comprise at least one sensor unit for capturing dental images. Optionally, the dental scanner may comprise a light source, such as a white light source and/or a structured light source for visual imaging. For example, a structured light scanner comprises a structured light source and an image sensor for recording reflection of the structured light which is reflected from the oral anatomy of the patient. Output of the image sensor or camera generated in response to the reflections is thus used for providing the dental images. The output may be in the form of a data stream generated continuously or intermittently as the dental scanner transmits structured light and records reflections thereof from the oral anatomy of the patient. A white or normal light source on the other hand may be used just for illuminating the oral anatomy such that the 2D dental images have a good exposure.

In the present context, a "3D model" or "digital impression" refers to a digital model obtained via scanning of the patient's craniofacial region, more specifically the dental region. The 3D model may be obtained via an extraoral scan or an intraoral scan, for example using a dental scanner. Thus, the 3D model refers to a digital representation of the patient's oral anatomy. Hence, the 3D model comprises a plurality of dental features.

The digital model may include representation of the patient's teeth and/or hard and/or soft tissues in and around the patient's gums. The 3D model or digital impression may be usable for providing for the patient any one or more of: dental treatment or procedure, surgical templates, custom devices, prosthetic restorations, and orthodontic aligners. The terms 3D model and digital impression may be used interchangeably in the present disclosure.

"Dental features" or oral features refer to information related to oral structures such as dentition and/or gingiva and/or other anatomical features of oral anatomy of a patient. Alternatively, or in addition, at least some of the oral structures of which dental or oral features are recorded may be one or more artificial structures such as one or more dental replacements, e.g., dental crown, bridge, veneer, etc. Alternatively, or in addition, the dental feature may in some cases even be a scan body (or scanbody), a registration object or other natural and/or artificial structure. The dental features, usually in the form of surface data are recorded for building the digital impression of a patient's oral anatomy. Usually for producing the digital impression, structures which are rigidly attached to the jaw of the patient are of more interest.

The terms "dental registration object" or "scaling object" may be used interchangeably in this disclosure.

Alternatively, or additionally, the dental feature may even be information related to a pathology or condition. As non-limiting examples, pathology or condition may be any one or more of, fracture or crack of tooth or caries, impaction, or any other characterizable state of the oral anatomy or any part thereof. A few non-limiting examples of the oral features or dental features are, any one or more of: shape, outline or boundary of any one or a group of teeth, their arrangement, sequence in any direction, a presence or a lack of presence of an expected feature such as a given tooth type. Alternatively, or additionally, the dental features may also be a shape, region, or a physical characteristic detected within an area or interest, such as an outline or boundary. Alternatively, or additionally, the dental features may also be, or they may be detected via, an interrelation between two different dental features. For example, a boundary between a tooth and gingiva.

Any kind of reconstruction may be used for generating the scaled 3D model, however, advantageously, a detection of the dental features may be performed, preferably using a data-driven approach. For example, a data-driven reconstruction logic may be used for generating the unscaled 3D model from 2D dental images acquired via a dental scanner. Thus, the data-driven reconstruction logic may convert 2D dental images to 3D surface model of the oral anatomy of the patient by detecting a plurality of dental features in the 2D images and build their 3D surface equivalent to reconstruct the unscaled 3D model.

"Deterministic feature" in the present context refers to a feature which is associated with obtainable or known information. The term deterministic is well-known in the field of mathematics and computer logic. A deterministic system may be considered a predictable system. The term means that data or information associated with a deterministic feature is either known or it can be retrieved or determined, e.g., by one or more calculations, and/or by using a known mathematical or logical relationship, such as an equation.

Some non-limiting examples of deterministic feature in the present context are: absolute or relative dimensions of an object, visual behavior such as color and/or texture and/or pattern, shape or profile such as contour and/or slope and/or recess.

According to an aspect, at least one of the deterministic features is related to a scan body.

Scanbodies are used to define 3D position and orientation of implants in dental 3D scans. Thus, scanbodies are used for the purposes of registering implant position and angulation. Scanbodies may be placed in a dental implant, an implant analogue, or on a dental abutment.

Different kinds of scanbodies exist, so a dentist or dental technician decides the type that is to be used in a given case. The applicant has realized that the workflow can be modified to leverage the deterministic nature of scanbodies to improve scale of 3D models. Scanbodies are typically provided with special features to be able to register during scan for the purpose of positioning and angulation. The present teachings extend their use to further determine scale of the anatomical features at least in vicinity of the scanbody, or within the frame of one or more dental images. The scale determination may even be propagated to other parts of the oral anatomy by relative comparison of anatomical features. For example, the dimensions of a tooth next to a scanbody are determined by comparing them to the scanbody. Anatomical features lying next to the tooth can be calculated based on the determined dimensions, and so forth.

For example, a database comprising information or deterministic features of existing scanbody types may be provided. Then the scanbody which is present may be identified from the scan data, i.e., in 2D dental images and/or in the unscaled 3D model. Since the scanbody's deterministic features, e.g., one or more of: physical dimensions, shape, color and material are known from the database, the scanbody can be detected in the unscaled 3D model. The detected scanbody's physical dimension may then be used to compute or correct the scaling of the unscaled 3D model. The correction may be performed e.g., on any one or more of: mesh, volume, point-based, or implicit function-based adjustments.

From the above, it shall be appreciated that the deterministic feature may refer not only to the dimensions of the scanbody, but also to other features, such as shape or any other optical or visual features which result in determining the specific scanbody which is present.

Alternatively, or additionally, at least one of the deterministic features is related to 3D data from an imaging modality such as X-ray, CBCT or another optical scan of at least a part of the dental condition. Especially when the 3D data of the imaging modality has a known resolution, the scale-free or inaccurate 3D model may e.g., be fitted into the 3D (or surface) data from the imaging modality of that same patient. Thus, the known physical dimensions of the 3D data may be transferred to more correctly scale the unscaled 3D model. In cases where the resolution of the 3D data is not sufficient for dental CAD/CAM applications (e.g., if pixel/voxel spacing of CBCT is too large), a plurality of measurements may be combined to reach better accuracy, preferably, sub-pixel registration accuracy.

Alternatively, or additionally, at least one of the deterministic features is related to a scaling object or dental registration object which is imaged while performing the dental scan. The scaling object may thus have known features such as dimensions which are used for computing one or more scaling factors. The scaling object may be colored and/or it may possess other physical properties such as texture, thus facilitating its scanning and/or recognition. Especially for intraoral applications, the object may require certain properties to be acceptable as a medical device. The scaling object in such cases is inserted into the patient's oral cavity during scanning or it is placed on the dental model during scanning. The object is thus scanned along with the model or oral cavity. The scaling object may be automatically or manually detected in the unscaled 3D model or via the 2D images acquired by the dental scanner based on its deterministic features (e.g., shape, color, texture or material). The scaling object's known features may then be used to compute or correct the scaling of the unscaled 3D model in a similar manner as described above in reference to the scanbody and/or the imaging modality.

Thus, by detecting via the scaling logic, one or more deterministic features in the unscaled 3D model and/or in the two-dimensional images, one or more scaling factors may be computed. These one or more scaling factors may be used to correct the unscaled 3D model to generate the scaled 3D model. Alternatively, the scaled 3D model may be reconstructed directly from the 2D images. The one or more scaling factors may be applied during reconstruction of the scaled 3D model.

It shall be appreciated that the above may also be combined such that by using multiple information sources accuracy is increased and/or to allow correcting for different scaling factors derived from different deterministic features, for example, scanbody may be used for correcting a first scaling factor, while the imaging modality is used for correcting a second scaling factor. This can be particularly beneficial for distortion correction in different parts of the unscaled 3D model which may have different degrees of distortion.

"Scaling factor" refers to a numerical correction which is applicable to the unscaled 3D model for correcting the scale of oral geometries captured in the model vis-a-vis the actual scale of the geometries in reality. The scaling factor may pertain to an absolute correction or a relative one. As a few non-limiting examples, the scaling factor may relate to a correction in features of geometries such as, distortion, size, shape, profile, angle, tilt, perspective or their likes, either on absolute or relative basis, for example between one geometry another.

"Scaling logic" refers to a hardware logic and/or a software routine which is used for detecting one or more deterministic features in the unscaled 3D model. According to an advantageous aspect, the scaling logic is at least partially a data-driven logic, or the scaling logic is a data-driven scaling logic. The data-driven scaling logic may be trained using a scaling training dataset which comprises historical dental images annotated with one or more deterministic features. As a non-limiting example, the scaling training dataset may relate to images with different kinds of scanbodies and their associated dimensions. Additionally, or alternatively, the scaling training dataset may comprise imaging modality images and their associated one or more deterministic features. Some imaging modalities such as cone beam computed tomography ("CBCT") provide a more accurate scale for anatomical features. Scale information can thus also be derived from such imaging modalities. For example, scale information for the same anatomical feature as present in a dental image and an image of another imaging modality can be extracted from the latter and applied to the unscaled 3D model to obtain the scaled 3D model. Similarly, additionally, or alternatively, the scaling training dataset may comprise images or historical dental images of one or more scaling objects and their associated deterministic features.

According to an advantageous aspect, the scaling logic is a data-driven logic. In such a case, the data-driven scaling logic may be trained or pretrained in a supervised manner using scaling training data which comprise historical unscaled 3D models and their corresponding historical scaling factors which resulted in a properly scaled 3D model. Thus, the data-driven scaling logic is provided the unscaled 3D model as input and the data-driven scaling logic provides the scaled 3D model as output.

"Unscaled 3D model" refers to a three-dimensional surface model of an oral anatomy. The unscaled 3D model may pertain to complete oral geometries or a part thereof, for example, just the upper jaw, or a group of selected teeth. The unscaled 3D model may have one or more inaccuracies in scale, in absolute and/or relative basis between two or more dental features. According to an aspect, the unscaled 3D model is built from dental images captured via a dental scanner. According to another aspect, the dental images are 2D dental images. The 2D dental images may even be visual imaging types. The unscaled 3D model may be in any suitable format, such as mesh, point cloud, etc.

"Scaled 3D model" refers to a 3D surface model which has been corrected at least for scale, globally or locally in specific parts. The scaled 3D model is related to the unscaled 3D model, but it is more accurately scaled as compared to the unscaled 3D model with regards to oral anatomy which is represented by the models. The scaled 3D model may be generated from the unscaled 3D model by applying the one or more scaling factors, or it may be reconstructed from scratch. Similar to the unscaled 3D model, the scaled 3D model may be related to the whole oral anatomy or part of it. The scaled 3D model may thus be derived by correcting the unscaled 3D model, or it may be reconstructed completely, e.g., from the 2D images and using at least one of the scaling factors.

"Data-driven logic" refers to a logic, which at least partially derives its functionality from training data. In contrast to a rigorous or analytical logic which is based on programmed instructions for performing a particular logical task, a data-driven logic can allow forming such instructions at least partially automatically using the training data. The use of data-driven logic can allow to describe logical and/or mathematical relationships without solving equations. This can reduce computational power and/or improve speed. Moreover, data-driven logic may be able to detect patterns or indications (e.g., in input or input data provided to the data-driven logic) which can otherwise not be known or may be difficult to implement as an analytical logic form.

The data-driven logic may be in software and/or hardware form, for example, executable via one or more computing units.

It shall be appreciated that in the present context, the data-driven logic refers to a trained mathematical logic which is parametrized according to the respective training data set. For example, the anatomy data-driven logic is parameterized via its respective training data to detect one or more anatomical features. An untrained logic lacks this information. Hence, the untrained logic or model is incapable for performing a desired detection. Feature engineering and training with the respective training datasets thus enables parametrization of the untrained logic. The result of such a training phase is the respective data-driven model, which as a result of the training process, preferably solely as a result of the training process, provides interrelations and logical capability related to the purpose for which the respective data-driven logic is to be used.

The data-driven logic preferably comprises, or it is a regression logic. In some cases, the data-driven logic may be combined with or it may further include an analytical logic. The analytical logic may describe the relation between its input and output as a function or one or more mathematical equations or logical criteria. Thus, any of the data-driven logics described herein may even be a hybrid logic. A hybrid logic refers to a logic which comprises first-principles parts, so called white-box described via a set of equations e.g., mathematical equations, as well as data-driven parts as explained previously. The data-driven part may also be called black-box logic or model. Hence, the data-driven logic in some cases may be a combination of white-box logic or analytical logic, and black-box logic. In some cases, the data-driven logic may be, or it may even have a grey-box part. A grey-box logic in this context refers to a logic or model which combines a partial analytical structure with a data-driven part using training data to complete the model.

"Data-driven model constructor logic" refers to a data-driven logic which is trained or pretrained in a supervised manner using model constructor training data. According to an aspect, the model constructor training data comprises a plurality of unscaled 3D models and their associated scaling factors which led to their corresponding historical scaled 3D models. Alternatively, or additionally, the data-driven model constructor logic may be trained in an unsupervised manner.

The data-driven model constructor logic thus generates the scaled 3D model as an output when the unscaled 3D model and/or the 2D images are provided at its input. The scaled 3D model may be generated by correcting the unscaled 3D model, e.g., by applying one or more scaling factors, or the scaled 3D model may be reconstructed completely, e.g., by feeding back the scaling factors to the data-driven reconstruction logic. In the latter case, the data-driven model constructor logic may convert scaling factors to correction parameters for the data-driven reconstruction logic to use for generating the scaled 3D model.

The scaling factors may be applied during the reconstruction process, and/or in some cases, the correction parameters may be applied to the 2D dental images such that the scaled 3D model may be reconstructed directly by using the corrected 2D images. In some cases, the data-driven reconstruction logic and the data-driven model constructor logic may be the same logic, e.g., they may be included in the combined logic.

Any two or more data-driven logics disclosed herein may be combined as one or more combined logics. According to an aspect, all data-driven logics are in the form of the same combined logic, which is trained in an end-to-end manner, using end-to-end training data comprising historical upstream inputs and their corresponding desired historical outcomes at the output downstream of the combined logic.

"Data-driven reconstruction logic" refers to a logic which is trained or pretrained in a supervised manner using reconstruction training data. According to an aspect, the reconstruction training data may comprise historical dental images and their corresponding reconstructed 3D model. As it was discussed, the data-driven reconstruction logic can reconstruct 3D surface model from 2D dental images, more specifically, visual imaging type. Thus, the unscaled 3D model or the scaled 3D model may be generated from 2D dental images.

Alternatively, or additionally, the data-driven reconstruction logic may be trained in an unsupervised manner.

The data-driven reconstruction logic is provided with the dental images as input. The data-driven reconstruction logic provides the unscaled 3D model as an output.

"Combined logic" refers to a logic comprising at least of the two different data-driven logics disclosed herein. The combined logic may be pretrained in a supervised manner using end-to-end training process. The end-to-end training process in this context may refer to at least partially annotated data comprising inputs and their corresponding desired outputs. In some cases, the combined logic may be trained fully or partially in an unsupervised manner.

"Structured light" in context of "structured light imaging" refers to projected light which comprises a pre-determined pattern. The structured light or pattern is projected onto a target surface for determining topography of the surface. The surface topography induces distortion in the light pattern, which is projected onto it. The distortion is recorded via an imaging sensor or camera and further analyzed to extract surface information and eventually build a digital model of the surface. It shall be appreciated that in context of intraoral scanning, the target surface is usually oral anatomy of a patient. As the dental scanner is moved along the areas or locations adjacent to the surface, the digital impression of the oral anatomy is expanded by stitching together the surface data from different locations. The term "structured light imaging" thus refers to the process of projecting structured light patterns and extracting the surface data from the reflections of said patterns.

"Visual imaging" refers to the process of producing a visual image or photographic image of an object. More specifically, visual imaging refers to imaging which produces a photorealistic image, e.g., which shows natural or near natural colors and/or texture of the object which is imaged. Accordingly, visual imaging may be performed using a white light or a light which allows the resulting visual image to show natural or near natural colors and/or texture to a human. Hence, when a visual image is shown via the HMI, the user may be provided a naturalistic reproduction of the object, at least in terms of color and/or texture. It shall be understood that for a greyscale visual image, texture may be a more central feature, whereas, for a color image, at least colors should be naturalistic, preferably both color and texture.

"Human machine interface" or "HMI" refers to a device or system which comprises at least one video unit or display screen for displaying to a user at least the artificially colorized projection image.

Thus, the HMI system may comprise a visual display or screen for displaying visual images or video. Optionally, the HMI system may also comprise an audio device. For example, the HMI system may also comprise a loudspeaker for outputting audio. The video unit may comprise a video screen which may be active or passive, for example an LCD screen, OLED screen or projection-based video system. Alternatively, or additionally, the video unit may comprise an augmented reality ("AR") device.

The HMI may even comprise one or more input devices for receiving user input.

The terms "computing unit", "computing device", "processing unit" or "processing device" may be used interchangeably in the present disclosure. The computing unit may comprise, or it may be in the form of, a processing means or computer processor such as a microprocessor, microcontroller, or the likes, having one or more computer processing cores.

"Computer processor" refers to an arbitrary logic circuitry configured for performing basic operations of a computer or system, and/or, generally, to a device which is configured for performing calculations or logic operations. In particular, the processing means or computer processor may be configured for processing basic instructions that drive the computer or system. As an example, the processing means or computer processor may comprise at least one arithmetic logic unit ("ALU"), at least one floating point unit ("FPU"), such as a math coprocessor or a numeric coprocessor, a plurality of registers, specifically registers configured for supplying operands to the ALU and storing results of operations, and a memory, such as an L1 and L2 cache memory. In particular, the processing means or computer processor may be a multi core processor. Specifically, the processing means or computer processor may be or may comprise a central processing unit ("CPU"). the processing means or computer processor may be a complex instruction set computing ("CISC") microprocessor, reduced instruction set computing microprocessor ("RISC"), Very long instruction word ("VLIW") microprocessor, a processor implementing other instruction sets or processors implementing a combination of instruction sets. The processing means may also be one or more special purpose processing devices such as an application specific integrated circuit ("ASIC"), a field programmable gate array ("FPGA"), a complex programmable logic device ("CPLD"), a digital signal processor ("DSP"), a network processor, or the like. The methods, systems and devices disclosed herein may be implemented as software in a DSP, in a microcontroller, or in any other side processor such as hardware unit within an ASIC, CPLD, or FPGA. It is to be understood that the term processing means or processor may also refer to one or more processing devices, such as a distributed system of processing devices located across multiple computer systems (such as cloud computing), and is not limited to a single device unless otherwise specified.

"Connectivity interface" or "communication interface" refers to a software and/or hardware interface for establishing communication such as transfer or exchange of signals or data. The communication may either be wired, or it may be wireless. The connectivity interface may be used to connect one or more devices, such as a dental scanner to a computing unit and/or a memory storage. Connectivity interface is preferably based on or it supports one or more communication protocols. The communication protocol may be a wireless protocol, for example: short distance communication protocol such as Bluetooth^{®}, or Wi-Fi, or long communication protocols such as cellular or mobile network, for example, second generation cellular network ("2G"), 3G, 4G, long term evolution ("LTE"), or 5G. Alternatively, or in addition, the connectivity interface may even be based on proprietary short distance or long-distance protocol. The connectivity interface may support any one or more standards and/or proprietary protocols.

"Network interface" refers to a device or a group of one or more hardware and/or software components that allow an operative connection with the network. For example, the network interface may be used to connect to a remote server or cloud service. In some cases, the network interface may be a part of the connectivity interface.

"Network" discussed herein may be any suitable kind of data transmission medium, wired, wireless, or their combination. A specific kind of network is not limiting the scope or generality of the present teachings. The network can hence refer to any suitable arbitrary interconnection between at least one communication end point to another communication end point. Network may comprise one or more distribution points, routers or other types of communication hardware. The interconnection of the network may be formed by means of physically hard wiring, optical and/or wireless radio frequency ("RF") methods. The network specifically may be, or it may comprise, a physical network fully or partially made by hard wiring, such as a fiber optical network or a network fully or partially made by electrically conductive cables or a combination thereof. The network may at least partially comprise the Internet.

That two or more components are "operatively" coupled or connected shall be clear to those skilled in the art. In a non-limiting manner, this means that there may be at least one communicative connection between the coupled or connected components e.g., they are the connectivity interface, the network interface or any suitable interface. The communicative connection may either be fixed, or it may be removable. Moreover, the communicative connection may either be unidirectional, or it may be bidirectional. Furthermore, the communicative connection may be wired and/or wireless. In some cases, the communicative connection may also be used for providing control signals.

"Memory storage" may refer to a device for storage of information, in the form of data, in a suitable storage medium. Preferably, the memory storage is a digital storage suitable for storing the information in a digital form which is machine readable, for example digital data that are readable via a computer processor. The memory storage may thus be realized as a digital memory storage device that is readable by a computer processor. Further preferably, the memory storage on the digital memory storage device may also be manipulated by a computer processor. For example, any part of the data recorded on the digital memory storage device may be written and or erased and or overwritten, partially or wholly, with the new data by the computer processor.

### BRIEF DESCRIPTION OF THE SEVERAL VIEWS OF THE DRAWINGS

Certain aspects of the present teachings will now be discussed with reference to the accompanying drawings that explain said aspects by the way of examples. Since the generality of the present teachings is not dependent on it, the drawings may not be to scale. Method and system aspects may be discussed in conjunction for ease of understanding. Certain features shown in the drawings may be logical features that are shown together with physical features for the sake of understanding and without affecting the generality or scope of the present teachings.
FIG. 1 illustrates a block diagram of a scanning system;
FIG. 2 illustrates a flowchart 200 showing a method aspect of the present teachings.

### DETAILED DESCRIPTION

In accordance with example aspects described herein, methods, systems and computer readable storage media can be provided, e.g., for providing a scaled 3D model of a dental condition.

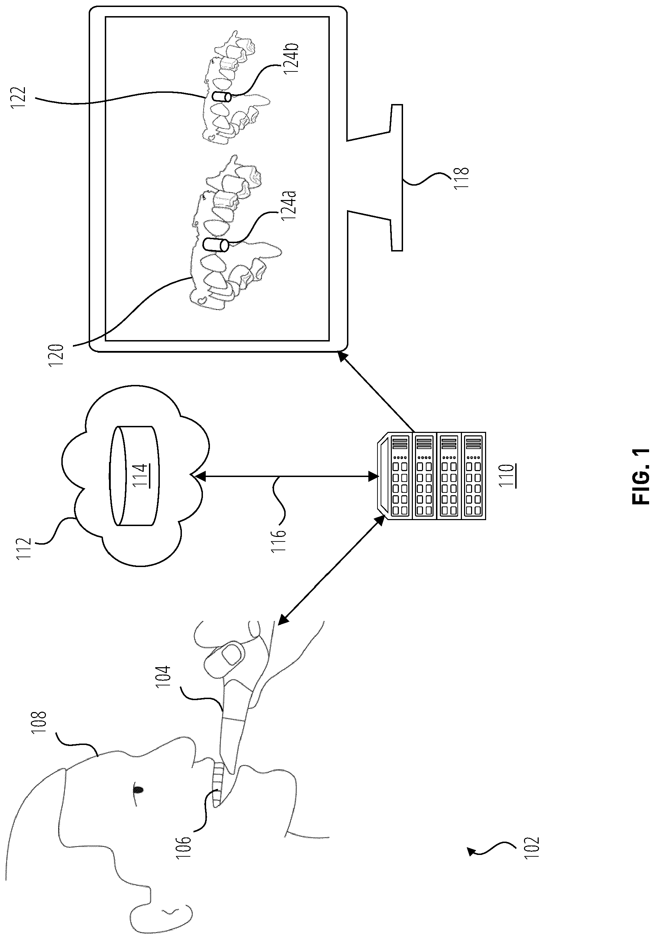

FIG. 1 shows a block diagram 102 of a scanning system. The system comprises a dental scanner 104, which is shown in FIG. 1 being used for intraoral scanning of dental condition 106 of a patient 108. The dental scanner 104 is operatively connected to a computing module 110, which comprises at least one computing unit. In some cases, the computing module 110 may be located at least partially within the dental scanner 104. In some cases, the computing module 110 may at least partially be a part of a cloud service 112. Thus, the computing module 110 may be a local device at the location of the dental scanner 104 and/or at least partially a remotely located device or system, e.g., one or more cloud services 112 and/or a remote server. The computing module 110 is also operatively connected to a memory storage 114, which may at least partially be a part of the cloud service 112. In this case, the memory storage 114 is shown as a part of the cloud service 112. The dental scanner 104 may connect to an external computing module 110 via a connectivity interface (not explicitly shown in FIG. 1). Any local devices, e.g., the dental scanner 104 and/or the local computing module 110 may connect to the cloud service 112 via one or more networks 116. A network interface (not explicitly shown in FIG. 1) may be used to connect the local devices to the remote devices, e.g., the cloud service 112. In some cases, the network interface and the connectivity interface may be the same unit.

Optionally, the computing module 110 may be operatively connected to an HMI 118 ("HMI"), which in FIG. 1 is shown as a computer screen. The connection between the computing module 110 and the HMI 118 may be via an output interface (not explicitly shown in FIG. 1), which may for example be a computer port or bus, e.g., display port, HDMI, USB, or their like. However, the output interface may even be an API for providing data to one or more computing units on the HMI 118 side. In some cases, the output interface may be a part of the network interface and/or the connectivity interface. Accordingly, it is possible that the three interfaces are the same device.

The dental scanner 104 comprises a sensor unit (not explicitly shown in FIG. 1) for imaging the surface of the dental condition 106. Optionally, the dental scanner 104 may comprise a structured light source for structured light imaging and/or a visual light source for visual imaging (not explicitly shown in FIG. 1). The light is projected on the dental condition 106. A plurality of dental images of the dental condition 106 is generated in response to receiving the reflection. Thus, during the scan, the dental scanner 104 is operated to capture the plurality of dental images of the dental condition 106. The dental images may be in the form of a data stream. These dental images or 2D images are provided to the computing module 110. The computing module 110 is configured to provide an unscaled 3D model 120 from the dental images. Advantageously, a data-driven reconstruction logic may be used for reconstructing the unscaled 3D model 120 from the dental images.

The computing module 110 uses a scaling logic for detecting one or more deterministic features in the unscaled 3D model 120 and/or in at least one of the dental images. One of the deterministic features may relate to a scanbody, which is shown in FIG. 1 as an intraoral scanbody 124a. For example, the scaling logic may detect one or more characteristic features of the intraoral scanbody 124a, such as profile, marking, texture, color, etc. The scaling logic may then compare scale of the intraoral scanbody 124a in the unscaled 3D model 120 with a database which comprises scale or size data of the intraoral scanbody 124a. The database may be located on the memory storage 114 or at another storage or location operatively accessible by the computing module 110. The scaling logic can thus compute one or more scaling factors in response to the detection of the deterministic features and/or the intraoral scanbody 124a in the unscaled 3D model 120. The scaling factors can be used for generating a scaled 3D model 122. The scaling factors may either be applied as one or more corrections to the unscaled 3D model 120, or the scaled 3D model 122 may be built by applying the scaling factors to the unscaled 3D model 120 and then calculating corrections for the dental images, such that the scaled 3D model 122 is rebuilt from the corrected dental images. Additionally, or alternatively, the scaled 3D model 122 may be reconstructed from the dental images and at least one of the scaling factors may be applied during reconstruction. In either case, the scale is corrected such that the size of the intraoral scanbody 124b is to scale in the scaled 3D model 122. This can also be used to correct the scale of other dental features, at least those which are adjacent to the intraoral scanbody 124a. In the example shown in FIG. 1, a global scale correction is applied based on the size of the intraoral scanbody 124b. Alternatively, or additionally, other deterministic features may also be detected, for example, a particular tooth and/or a specific pre-installed restoration present in the oral cavity may be detected and scale may be derived from one or more imaging modalities. Alternatively, or additionally, one or more dental registration objects may be detected in a similar manner to a scanbody to compute one or more scaling factors.

Alternatively, or additionally, local scaling factors may also be computed, i.e., scaling factors to correct parts of the unscaled 3D model 120 with respect to each another. This can for example be done when multiple scanbodies and/or dental registration objects are used in different parts of the oral anatomy. Alternatively, or additionally, one or more imaging modalities can be used if they are available for correcting specific parts of the unscaled 3D model 120 with respect to each another. Alternatively, or additionally, distortion correction may also be performed, for example, by comparing profile of the intraoral scanbody 124a in the unscaled 3D model 120 with respect to the normal profile in the database. Thus, perspective or optics induced non-idealities can also be corrected.

The scaled 3D model 122 is usable for manufacturing a dental object such as an aligner, and/or the scaled 3D model 122 may be usable for performing a dental procedure such as a restoration.

Especially in cases where the dental images are visual imaging type, for example, captured via a low-cost scanner which does not have a structured light mode, the present teachings can allow a more accurate to scale model in the form of the scaled 3D model 122. The teachings may also be applied in professional scanners for improving or validating dental digital impressions.

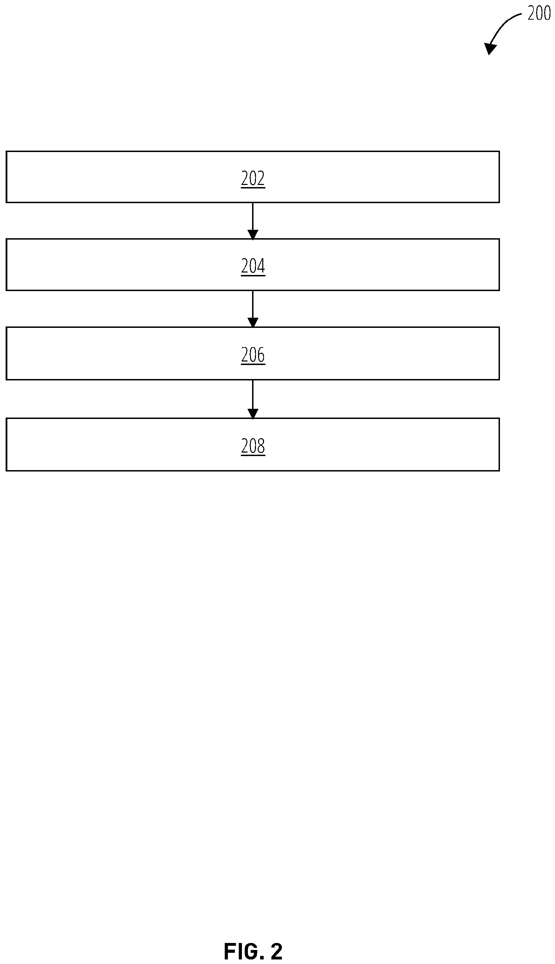

FIG. 2 shows a flowchart 200 which may be implemented as one or more routines which are executed by one or more computing units. At least certain related system aspects shall also be apparent from the following. The flowchart 200 may be implemented as one or more routines in a dental scanner and/or a scanning system, for example that shown in FIG. 1.

In block 202, it is provided an unscaled 3D model 120 and/or a plurality of two-dimensional images of a dental condition 106 of a patient 108.

In block 204, it is detected one or more deterministic features in the unscaled 3D model 120 and/or in at least one of the two-dimensional images. The detection may be performed via a scaling logic.

In block 206, it is computed one or more scaling factors in response to the detection. The scaling factors may relate to a global scale correction for the unscaled 3D model 120, and/or they may relate to one or more local corrections for specific one or more parts of the unscaled 3D model 120.

Thus, in block 208, it is generated the scaled 3D model 122 by applying the scaling factors directly or indirectly to the unscaled 3D model 120. By directly it is meant that the scaling factors are applied as corrections to the unscaled 3D model 120 to obtain the scaled 3D model 122. By indirectly it is meant corrections are computed for the dental images and then the scaled 3D model 122 is reconstructed using the corrected dental images. Alternatively, the scaling factors may relate to reconstruction parameters used for reconstructing a scaled 3D model 122 from the plurality of 2D images. In some cases, for some of the 2D images there may be provided metadata including one or more of the scaling factors. These metadata can then be used for the reconstruction of the scaled 3D model.

The unscaled 3D model 120 may be provided from the 2D images. The 2D images are captured via a dental scanner 104. The reconstruction is advantageously done using a data-driven reconstruction logic.

The method steps may be performed in the order as shown listed in the examples or aspects. It should be noted, however, that under specific circumstances a different order may also be possible. Further, it is also possible to perform one or more of the method steps once or repeatedly. These steps may be repeated at regular or irregular time periods. Further, it is possible to perform two or more of the method steps simultaneously or in a timely overlapping fashion, specifically when some or more of the method steps are performed repeatedly. The method may comprise further steps which are not listed.

The word "comprising" does not exclude other elements or steps, and the indefinite article "a" or "an" does not exclude a plurality. A single processing means, processor or controller or other similar unit may fulfill the functions of several items recited in the claims. The mere fact that certain measures are recited in mutually different dependent claims does not indicate that a combination of these measures cannot be used to advantage. Any different signs in the claim should not be construed as limiting the scope.

Further, it should be noted that in the present disclosure, the terms "at least one", "one or more" or similar expressions indicating that a feature or element may be present once or more than once typically may have been used only once when introducing the respective feature or element. Thus, in some cases unless specifically stated otherwise, when referring to the respective feature or element, the expressions "at least one" or "one or more" may not have been repeated, notwithstanding the fact that the respective feature or element may be present once or more than once.

Further, the terms "preferably", "more preferably", "particularly", "more particularly", "specifically", "more specifically" or similar terms are used in conjunction with optional features, without restricting alternative possibilities. Thus, any features introduced by these terms are optional features and are not intended to restrict the scope of the claims in any way. The present teachings may, as those skilled in the art will recognize, be performed by using alternative features. Similarly, the features introduced by "according to an aspect" or similar expressions are intended to be optional features, without any restriction regarding alternatives to the present teachings, without any restrictions regarding the scope of the present teachings and without any restriction regarding the possibility of combining the features introduced in such way with other optional or non-optional features of the present teachings.

Unless otherwise defined, all technical and scientific terms used herein have the same meaning as commonly understood by one of ordinary skill in the art to which the present teachings belong.

Various examples have been disclosed above for a method, a system, a device, a use, software program, and a computing unit comprising the computer program code for carrying out the methods herein disclosed. For example, it has been disclosed a method for providing a scaled 3D model of a dental condition comprising: providing, an unscaled 3D model and/or a plurality of 2D images of the dental condition; detecting, via a scaling logic, one or more deterministic features in the unscaled 3D model and/or in at least one of the 2D images; computing, in response to the detection, one or more scaling factors; generating, the scaled 3D model, by: applying at least one of the scaling factors to the unscaled 3D model; or reconstruction using the plurality of 2D images. The present teachings also relate to systems, a dental scanner, software products, uses and storage media. Those skilled in the art will understand however that changes and modifications may be made to those examples without departing from the spirit and scope of the accompanying claims and their equivalence. It will further be appreciated that aspects from the method and product embodiments discussed herein may be freely combined.

Any headings utilized within the description are for convenience only and have no legal or limiting effect.

Summarizing and without excluding further possible embodiments, certain example embodiments of the present teachings are summarized in the following clauses:
Clause 1. A computer-implemented method for providing a scaled 3D model of a dental condition, which method comprises:
   - providing, an unscaled 3D model and/or a plurality of 2D images of the dental condition;
   - detecting, via a scaling logic, one or more deterministic features in the unscaled 3D model and/or in at least one of the 2D images;
   - computing, in response to the detection, one or more scaling factors;
   - generating, the scaled 3D model, by:
      applying at least one of the scaling factors to the unscaled 3D model; or
      reconstruction using the plurality of 2D images.
Clause 2. The method of clause 1, wherein the unscaled 3D model is provided from the 2D images captured via a dental scanner.
Clause 3. The method of clause 2, comprising:
   - reconstructing, using a data-driven reconstruction logic, the unscaled 3D model from the 2D images.
Clause 4. The method of any one of clauses 1 to 3, wherein at least one of the deterministic features is related to a scan body.
Clause 5. The method of any one of clauses 1 to 4, wherein at least one of the deterministic features is related to 3D data from an imaging modality.
Clause 6. The method of any one of clauses 1 to 5, wherein at least one of the deterministic features is related to a dental registration object detectable via the scaling logic.
Clause 7. The method of any one of clauses 1 to 6, wherein the computation of at least one of the scaling factors is also performed via the scaling logic.
Clause 8. The method of any one of clauses 1 to 7, wherein the scaled 3D model is generated via a data-driven model constructor logic.
Clause 9. The method of any one of clauses 1 to 8, wherein the scaling logic is a data-driven scaling logic.
Clause 10. The method of clause 8 or 9, wherein the data-driven model constructor logic and the data-driven scaling logic are parts of a combined data-driven logic.
Clause 11. The method of any one of clauses 1 to 10, wherein at least one of the scaling factors is computed for distortion correction of the unscaled 3D model.
Clause 12. A computer-implemented method comprising:
   - performing a dental procedure and/or manufacturing a dental object using the scaled 3D model as generated in any of the above method clauses.
Clause 13. A computer software product, or a non-transitory computer-readable storage medium storing the program, comprising instructions which when executed by suitable one or more computing units cause any of the computing units to perform the steps of any of the above method clauses.
Clause 14. A system comprising means for performing the steps of any of the above method clauses.
Clause 15. A dental scanner comprising:
   a sensor unit for capturing 2D images of a dental condition; and
   an interface for connecting to one or more computing units, any of which computing units are configured to:
      - provide, an unscaled 3D model and/or a plurality of 2D images of the dental condition;
      - detect, via a scaling logic, one or more deterministic feature in the unscaled 3D model and/or in at least one of the 2D images;
      - compute, in response to the detection, one or more scaling factor;
      - generate a scaled 3D model by:
   applying the scaling factor to the unscaled 3D model; or
   reconstruction using the plurality of two-dimensional images.
Clause 16. The dental scanner of clause 15, wherein any of the computing units are configured to provide the unscaled 3D model by constructing the unscaled 3D model using the 2D image.
Clause 17. Use of the scaled 3D model as generated in any of the above method clauses for performing a dental procedure and/or for manufacture of a dental object.
Clause 18. A data-storage medium storing thereupon the scaled 3D model as generated in any of the above method clauses.

## Claims

1. A computer-implemented method for providing a scaled 3D model of a dental condition, which method comprises:
- providing, an unscaled 3D model and/or a plurality of 2D images of the dental condition;
- detecting, via a scaling logic, one or more deterministic features in the unscaled 3D model and/or in at least one of the 2D images;
- computing, in response to the detection, one or more scaling factors;
- generating, the scaled 3D model, by:
applying at least one of the scaling factors to the unscaled 3D model; or
reconstruction using the plurality of 2D images.

2. The method of claim 1, wherein the unscaled 3D model is provided from the 2D images.

3. The method of claim 2, comprising:
- reconstructing, using a data-driven reconstruction logic, the unscaled 3D model from the 2D images.

4. The method of any one of claims 1 to 3, wherein at least one of the deterministic features is related to a scan body.

5. The method of any one of claims 1 to 4, wherein at least one of the deterministic features is related to 3D data from an imaging modality.

6. The method of any one of claims 1 to 5, wherein at least one of the deterministic features is related to a dental registration object detectable via the scaling logic.

7. The method of any one of claims 1 to 6, wherein the computation of at least one of the scaling factors is also performed via the scaling logic.

8. The method of any one of claims 1 to 7, wherein the scaled 3D model is generated via a data-driven model constructor logic.

9. The method of any one of claims 1 to 8, wherein the scaling logic is a data-driven scaling logic.

10. The method of claim 8 or 9, wherein the data-driven model constructor logic and the data-driven scaling logic are parts of a combined data-driven logic.

11. The method of any one of claims 1 to 10, wherein at least one of the scaling factors is computed for distortion correction of the unscaled 3D model.

12. A computer software product, or a non-transitory computer-readable storage medium storing the program, comprising instructions which when executed by suitable one or more computing units cause any of the computing units to perform the steps of any of the above method claims.

13. A system comprising means for performing the steps of any of the above method claims.

14. Use of the scaled 3D model as generated in any of the above method claims for performing a dental procedure and/or for manufacture of a dental object.

15. A data-storage medium storing thereupon the scaled 3D model as generated in any of the above method claims.
